# EUROPÄISCHE PATENTANMELDUNG

(11) **EP 4 703 166 A1**
(43) Veröffentlichungstag der Anmeldung: **04.03.2026**
(21) Anmeldenummer: 24196516.9
(22) Anmeldetag: 26.08.2024
(51) Int. Cl.: B60J 7/06

(54) **DACHPLANENANORDNUNG UND NUTZFAHRZEUG**

(71) Anmelder: Schmitz Cargobull AG, 48341 Altenberge (DE)
(72) Erfinder: DERKS, Roger, 2971 CK Grubbenvorst (NL); MOELLENBRINK, Lars, 59368 Werne (DE); SCHOUWINK, Christian, 4540 Pfarrkirchen bei Bad Hall (AT); MENSING, Udo, 48612 Horstmar (DE); RAUSS, Niklas, 48432 Rheine (DE)
(74) Vertreter: Liedtke & Partner Patentanwälte

(57) **Zusammenfassung**

Die Erfindung betrifft eine Dachplanenanordnung (1) für einen Nutzfahrzeugaufbau
- mit einer biegeelastischen sowie falt- und/oder rollbaren Dachplane (5) und
- mit zumindest einem an zumindest einer Dachplanen-Flachseite der Dachplane (5) befestigten zugfesten und biegeelastischen Versteifungselement (6 bis 17), wobei
- das zumindest eine Versteifungselement (6 bis 17) ein aus einem textilen Gewebe gebildetes Gurtband (18) aufweist,
- an einer Gurtband-Flachseite des Gurtbandes (18) zumindest ein flaches Verbindungselement (19) mit einer ersten Element-Flachseite stoff- und/oder formschlüssig befestigt ist,
- das zumindest eine Verbindungselement (19) aus einem mit der Dachplane (5) verklebbaren und/oder verschweißbaren Material gebildet ist und
- das zumindest eine Verbindungselement (19) einer der ersten Element-Flachseite gegenüberliegenden zweiten Element-Flachseite der Dachplanen-Flachseite zugewandt und mit dieser verklebt und/oder verschweißt ist.

Die Erfindung betrifft weiterhin ein Nutzfahrzeug, aufweisend einen Nutzfahrzeugaufbau mit einer solchen Dachplanenanordnung (1).

## Beschreibung

Die Erfindung betrifft eine Dachplanenanordnung für einen Nutzfahrzeugaufbau.

Die Erfindung betrifft weiterhin ein Nutzfahrzeug.

Aus der DE 10 2017 111 235 B4 ist ein Nutzfahrzeugaufbau bekannt. Der Nutzfahrzeugaufbau umfasst ein Schiebeverdeck, das eine an Dachspriegeln befestigte Dachplane und ein gurtartiges Aussteifungselement aufweist. Das Aussteifungselement erstreckt sich quer zur einer Planenlängsrichtung und ist auf einer Innenseite der Dachplane abschnittsweise mit dieser verbunden. Dabei weist das Aussteifungselement ein freies Längsende auf, das an einem Dachspriegel befestigt ist. Ein Randbereich der Dachplane überlappt das freie Längsende des Aussteifungselements lose. Das Aussteifungselement weist einen Verbindungsbereich auf, der sich zwischen zwei freien Längsenden des Aussteifungselements erstreckt und mittelbar oder unmittelbar mit der Dachplane verbunden ist. Dabei ist der Verbindungsbereich durch Schweißen oder Kleben mit der Dachplane verbunden und in einer Dachplanentasche geführt, die mit der Dachplane fest verbunden ist.

Weiterhin ist aus der DE 20 2006 010 594 U1 eine Dachplanenanordnung für einen Nutzfahrzeugaufbau bekannt. Die Dachplanenanordnung besteht aus einer Dachplane aus einem schweiß- oder klebfähigen Polymermaterial und aus zwei in einem Dachbereich randseitig in Fahrtrichtung angeordneten Längsträgern. An den Längsträgern sind quer zur Fahrtrichtung verlaufende Spriegel geführt, auf die die Dachplane aufgelegt und mit denen sie verbunden ist. An einigen Spriegeln sind in einem Abstand von einer Innenkante der Längsträger Zurrpunkte angebracht, wobei Zugelemente mit den Zurrpunkten verbunden sind. Die Zugelemente bestehen aus biegsamen Metall-Zugdrähten und verbinden versetzt gegenüberliegende Zurrpunkte abweichend von einer Querrichtung. Dabei sind die Zugelemente in ein Material eines Planenmittelteils eingearbeitet oder mit diesem verbunden. Als Zugelemente werden Drahtseile verwendet, welche mit Kunststoff-Folienstreifen derart verbunden sind, dass die Drahtseile in der Mitte des Kunststoff-Folienstreifens verlaufen und dieser mit einem Material der Dachplane verklebt oder verschweißt ist.

Die EP 2 535 217 B1 beschreibt eine Dachhaut für Nutzfahrzeuge mit einem im Dachbereich offenen Fahrzeugaufbau, wobei an der Dachhaut mehrere gurtartige zugfeste und biegeelastische Versteifungselemente kraftübertragend befestigt sind. Die Versteifungselemente stabilisieren die Dachhaut und steifen diese gegen Zugkräfte aus. Dabei sind die gurtartigen Versteifungselemente schräg zu einer Längsachse der Dachhaut angeordnet und bilden eine Schrägversteifung. Die mehreren gurtartigen Versteifungselemente sind untereinander kraftübertragend verbunden. Die Dachhaut ist als biegeelastische und faltbare Plane aus Kunststoff oder aus einem Gewebe ausgebildet. Die gurtartigen Versteifungselemente sind direkt an der Dachhaut befestigt oder jeweils in einer Hülle angeordnet, wobei die Hüllen an der Dachhaut befestigt sind. Eine Verbindung zwischen der Dachplane und dem jeweiligen gurtartigen Versteifungselement oder der jeweiligen Hülle ist als Schweißverbindung ausgebildet. Die Versteifungselemente sind jeweils als flacher Gurt ausgebildet und weisen ein Gewebe oder Geflecht auf, wobei eine längs einer Hauptebene der Dachhaut ausgerichtete Breite des Gurts größer als dessen Höhe ist.

Weiterhin beschreibt die EP 3 342 611 B1 eine Abdeckungsanordnung für Fahrzeugaufbauten. Die Abdeckungsanordnung besteht
- aus Seitenwänden, die seitliche Ladeflächen von Fahrzeugaufbauten abdecken,
- einer Rückwand, die eine hintere Ladefläche abdeckt, und
- einer Dachplatte, die eine Überkopf-Ladefläche abdeckt.

Die Dachplatte umfasst ein Stützelement, Teile von Schienen und eine verstärkte Abdeckung. Die Abdeckung bietet Schutz für Materialien in dem Fahrzeugaufbau und Ladungssicherheit, indem sie auf der Dachplatte montiert ist. Dabei stellt ein Spannelement sicher, dass die verstärkte Abdeckung gespannt ist, starr steht und Funktionen von Plane und Stahlseilen übernimmt, die verwendet werden, um die Fahrzeugaufbauten bei einem Transport abzudecken. Eine solche Abdeckung ermöglicht, dass die Dachplatte geschlossen wird, wobei verhindert wird, dass äußere Einwirkungen die Materialien in dem Aufbau beschädigen. Es ist eine Stütze vorgesehen, die es ermöglicht, dass das Spannelement an der Abdeckung montiert wird, die an der Innenseite der durch die Spannelemente und die Abdeckung in Ausrichtung mit dem Stützelement gebildeten Anordnung montiert ist. Dabei ist das Spannelement in Form eines Gewebes, eines Gewirks, als Gurt oder Stahlseil ausgebildet und auf oder unterhalb der Abdeckung platziert und durch Nähen, Schweißen oder lösbare Verbindung mit der Abdeckung verbunden.

Der Erfindung liegt die Aufgabe zu Grunde, eine neuartige Dachplanenanordnung für einen Nutzfahrzeugaufbau und ein neuartiges Nutzfahrzeug anzugeben.

Die Aufgabe wird erfindungsgemäß gelöst durch eine Dachplanenanordnung, welche die im Anspruch 1 angegebenen Merkmale aufweist, und durch ein Nutzfahrzeug, welches die im Anspruch 16 angegebenen Merkmale aufweist.

Vorteilhafte Ausgestaltungen der Erfindung sind Gegenstand der abhängigen Ansprüche.

Die erfindungsgemäße Dachplanenanordnung für einen Nutzfahrzeugaufbau weist
- eine biegeelastische sowie falt- und/oder rollbare Dachplane und
- zumindest ein an zumindest einer Dachplanen-Flachseite der Dachplane befestigtes zugfestes und biegeelastisches Versteifungselement auf.

Dabei
- weist das zumindest eine Versteifungselement ein aus einem textilen Gewebe gebildetes Gurtband auf,
- ist an einer Gurtband-Flachseite des Gurtbandes zumindest ein flaches Verbindungselement mit einer ersten Element-Flachseite stoff- und/oder formschlüssig befestigt,
- ist das zumindest eine Verbindungselement aus einem mit der Dachplane verklebbaren und/oder verschweißbaren Material gebildet und
- ist das zumindest eine Verbindungselement einer der ersten Element-Flachseite gegenüberliegenden zweiten Element-Flachseite der Dachplanen-Flachseite zugewandt und mit dieser verklebt und/oder verschweißt.

Eine derartige Ausbildung des Versteifungselements ermöglicht es, das Gurtband anhand des Verbindungselements in besonders einfacher Weise mittelbar an der Dachplane zu verkleben und/oder zu verschweißen, auch wenn das Gurtband selbst nicht und/oder nur unzureichend und/oder nur mit erheblichem Aufwand mit der Dachplane verkleb- und/oder verschweißbar ist. Dadurch ist es wiederum möglich, Gurtbänder aus einem beliebigen Material zu verwenden. Insbesondere können dabei kostengünstige und in großer Anzahl verfügbare Gurtbänder verwendet werden.

Die stoff- und/oder formschlüssige Befestigung des Verbindungselements an der Gurtband-Flachseite ist dabei insbesondere derart ausgeführt, dass eine Struktur des Gurtbandes nicht vollständig oder nicht von dem Verbindungselement durchdrungen ist, so dass eine mechanische Flexibilität des Gurtbandes zumindest nahezu nicht beeinträchtigt wird. Insbesondere kann die Flexibilität des Gurtbandes gegenüber einer Verbindung, bei welcher ein Gewebe oder Gewirk oder einzelnen Elemente von einem Verbindungselements durchdrungen sind, signifikant erhöht werden, so dass das Rollen und/oder Falten der Dachplane nicht beeinträchtigt wird. Selbst besonders kostenintensive bekannte Elemente, bei welchen Aramidfasern in eine aus Polyvinylchlorid gebildete Ummantelung eingebettet sind, weisen eine signifikant höhere Steifigkeit auf.

In einer möglichen Ausgestaltung der Dachplanenanordnung sind an der Gurtband-Flachseite des Gurtbandes mehrere flache Verbindungselemente mit ihren ersten Element-Flachseiten stoff- und/oder formschlüssig befestigt. Durch eine solche segmentierte Aufbringung mehrerer Verbindungselemente auf das Gurtband, kann eine mechanische Flexibilität des Versteifungselements weiter erhöht werden.

In einer weiteren möglichen Ausgestaltung der Dachplanenanordnung ist in Längsrichtung des Gurtbandes zwischen den Verbindungselementen ein Abstand ausgebildet. Auch hierdurch kann eine mechanische Flexibilität des Versteifungselements weiter erhöht werden. Gleichzeitig kann ein Materialeinsatz für die Verbindungselemente minimiert werden.

In einer weiteren möglichen Ausgestaltung der Dachplanenanordnung ist das zumindest eine Verbindungselement bandförmig ausgebildet und erstreckt sich über eine gesamte Länge des Gurtbandes. Dies ermöglicht eine über die gesamte Länge des Versteifungselements ausgebildete und einfach erzeugbare Verbindung zwischen diesem und der Dachplane. Weiterhin zeichnet sich eine solche Verbindung durch eine besonders hohe mechanische Stabilität aus.

Unabhängig davon, ob an dem Gurtband ein Verbindungselement über dessen gesamte Länge oder mehrere Verbindungselemente angeordnet sind, kann das Verbindungselement als Meter- bzw. Endlosmaterial besonders einfach und kostengünstig erzeugt werden und je nach Anwendung in einfacher Weise, beispielsweise durch einfaches Abschneiden, auf eine bestimmte Länge konfektioniert werden. Durch die hohe mechanische Flexibilität des Verbindungselements ist dieses in einfacher und raumsparender Weise auch als Rollenmaterial erzeugbar, transportierbar, lagerbar und handhabbar.

In einer weiteren möglichen Ausgestaltung der Dachplanenanordnung sind das zumindest eine Verbindungselement und die Dachplane aus dem gleichen Material gebildet. Eine solche Ausbildung ermöglicht eine besonders einfach herstellbare und durch eine hohe Haltbarkeit und mechanische Stabilität ausgezeichnete Verbindung zwischen dem Versteifungselement und der Dachplane.

In einer weiteren möglichen Ausgestaltung der Dachplanenanordnung ist das Gurtband aus einem Material gebildet, welches Polyester und/oder Polypropylen und/oder Polyamid, insbesondere diese Materialien umfassende Garne gemäß DIN EN 12195-2, umfasst. Derartige Gurtbänder sind beispielsweise in einer Verwendung für so genannte Spann- oder Zurrgurte bekannt und zeichnen sich durch eine hohe mechanische Belastbarkeit sowie Haltbarkeit aus und sind kostengünstig in ausreichender Menge verfügbar. Mittels solcher Gurtbänder ist das Versteifungselement kostengünstig und in hoher Qualität herstellbar.

In einer weiteren möglichen Ausgestaltung der Dachplanenanordnung sind das zumindest eine Verbindungselement und das Gurtband miteinander vernäht und/oder verklebt und/oder vernietet. Eine solche Verbindung zwischen Verbindungselement und Gurtband eignet sich besonders zur oben genannten nicht vollständigen oder nicht durchdringenden Verbindung.

In einer weiteren möglichen Ausgestaltung der Dachplanenanordnung ist das zumindest eine Versteifungselement schräg zu einer Längsachse bzw. Längsausdehnung der Dachplane verlaufend angeordnet. Unter einem schrägen Verlauf wird dabei ein Verlauf mit einem Winkel von beispielsweise zwischen 45 ° und 80 ° zu der Längsausdehnung verstanden, so dass die Kräfte von der Dachplane auf einen Unterbau mit Längsträgern und Querträgern und umgekehrt übertragen und verteilt werden können. So kann beispielsweise bei einer Kurvenfahrt des Nutzfahrzeugs eine auf einen oberen Bereich einer Runge und eines Längsträgers einwirkende Kraft zum Teil in die Dachplane eingeleitet werden. Die Rungen werden dabei gestützt und es werden Querbelastungen aufgenommen, ohne dass eine Funktion des Daches und der Dachplane, nämlich ein Verschieben und Zusammenfalten vor einer Entladung, dadurch behindert werden.

In einer weiteren möglichen Ausgestaltung der Dachplanenanordnung ist das zumindest eine Versteifungselement in Richtung der Längsausdehnung der Dachplane verlaufend angeordnet. Dies ermöglicht eine Stabilisierung der Dachplane in Längsrichtung und eine Übertragung und Verteilung von in Längsrichtung wirkenden Kräften von der Dachplane auf einen Unterbau mit Längsträgern und Querträgern und umgekehrt.

In einer weiteren möglichen Ausgestaltung der Dachplanenanordnung ist das zumindest eine Versteifungselement in Richtung einer Querausdehnung bzw. Querachse der Dachplane verlaufend angeordnet. Dies ermöglicht eine Stabilisierung der Dachplane in Querrichtung und eine Übertragung und Verteilung von in Querrichtung wirkenden Kräften von der Dachplane auf einen Unterbau mit Längsträgern und Querträgern und umgekehrt.

In einer weiteren möglichen Ausgestaltung der Dachplanenanordnung ist das zumindest eine Versteifungselement randseitig an der Dachplane angeordnet. Somit kann ein Versteifungsrahmen gebildet werden, welcher beispielsweise bei Kurvenfahrt ein Ausbauchen des Nutzfahrzeugaufbaus, insbesondere von Rungen und Längsträgern sowie daran befestigter Planen, zur kurvenäußeren Seite verhindert oder zumindest reduziert.

In einer weiteren möglichen Ausgestaltung der Dachplanenanordnung sind an der Dachplane mehrere Versteifungselemente befestigt, wobei die Versteifungselemente schräg zu einer Längsausdehnung der Dachplane und/oder in Richtung der Längsausdehnung und/oder quer zur Längsausdehnung verlaufend angeordnet sind. Hierdurch können eine besonders hohe mechanische Stabilität und Kraftaufnahmefähigkeit der Dachplanenanordnung erzielt werden.

In einer weiteren möglichen Ausgestaltung der Dachplanenanordnung ist zumindest ein Teil der Versteifungselemente untereinander kraftübertragend verbunden. Dies ermöglicht eine optimierte Kraftübertragung und Kraftverteilung zwischen mehreren Versteifungselementen.

In einer weiteren möglichen Ausgestaltung der Dachplanenanordnung weist diese
- zwei in einem Dachbereich randseitig in Fahrtrichtung angeordnete Längsträger und
- zwischen den Längsträgern quer zu einer Längsausdehnung der Dachplane verlaufende und relativ zu den Längsträgern in Richtung der Längsausdehnung der Dachplane verschiebbare Querträger auf,
   wobei
- die Dachplane auf die Querträger aufgelegt und mit diesen verbunden ist,
- zumindest an zwei Querträgern jeweils zumindest ein Zurrpunkte angeordnet ist und
- an zwei Zurrpunkten unterschiedlicher Querträger zumindest ein Versteifungselement befestigt ist.

Eine solche Anordnung ermöglicht es, für ein Nutzfahrzeug ein zwischen einer Geschlossenstellung und zumindest einer Offenstellung verfahrbares, insbesondere falt- und/oder aufrollbares, Dach bei gleichzeitig besonders hoher mechanischer Stabilität des Nutzfahrzeugaufbaus zu realisieren. Bei geöffnetem Dach ist eine Beladung des Nutzfahrzeugaufbaus, beispielsweise mittels eines Gabelstaplers oder Krans, vereinfacht. Beispielsweise kann eine solche Dachplanenanordnung Bestandteil eines so genannten Curtainsiders sein, bei welchem auch Seitenplanen von einer Geschlossenstellung in zumindest eine Offenstellung verfahrbar, beispielsweise falt- und/oder aufrollbar, sind.

In einer weiteren möglichen Ausgestaltung der Dachplanenanordnung ist das zumindest eine Versteifungselement in einem vollständig entfalteten und/oder ausgerollten Zustand der Dachplane gespannt, so dass auf dieses einwirkende Zugkräfte effektiv aufgenommen werden können.

Das erfindungsgemäße Nutzfahrzeug weist einen Nutzfahrzeugaufbau mit einer vorgenannten Dachplanenanordnung mit den genannten Vorteilen auf.

Ausführungsbeispiele der Erfindung werden im Folgenden anhand von Zeichnungen näher erläutert.

Darin zeigen:
- Figur 1: schematisch eine Draufsicht einer Unterseite eines Ausführungsbeispiels einer Dachplanenanordnung für einen Nutzfahrzeugaufbau,
- Figur 2: schematisch eine Draufsicht einer Unterseite eines weiteren Ausführungsbeispiels einer Dachplanenanordnung für einen Nutzfahrzeugaufbau,
- Figur 3: schematisch eine Draufsicht eines Versteifungselements,
- Figur 4: schematisch eine Explosionsdarstellung eines Querschnitts eines Ausschnitts einer Dachplanenanordnung, und
- Figur 5: schematisch eine perspektivische Ansicht einer Dachplanenanordnung für einen Nutzfahrzeugaufbau.

Einander entsprechende Teile sind in allen Figuren mit den gleichen Bezugszeichen versehen.

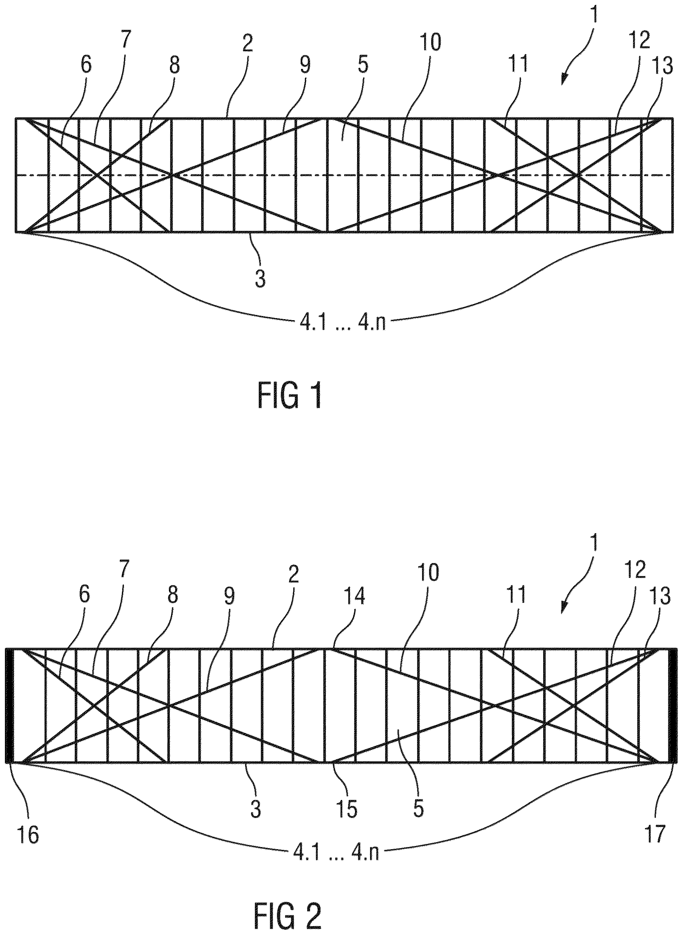

**Figur 1** zeigt eine Draufsicht einer Unterseite eines Ausführungsbeispiels einer Dachplanenanordnung 1 für einen Nutzfahrzeugaufbau.

Der Nutzfahrzeugaufbau ist beispielsweise Bestandteil eines Sattelaufliegers, beispielsweise eines so genannten Curtainsiders. Ein Laderaum eines solchen Curtainsiders umfasst einen nicht näher dargestellten Ladeboden, mehrere zumindest im Wesentlich senkrecht von diesem nach oben abragende Rungen, an oberen Enden der Rungen angeordnete und mit diesen verbundene Längsträger 2, 3 und zwischen den Längsträgern 2, 3 angeordnete Querträger 4.1 bis 4.n.

In Längsausdehnung des Laderaums ist eine diesen begrenzende, nicht näher dargestellte, sich zumindest im Wesentlichen senkrecht vom Ladeboden erstreckende vordere Bordwand vorgesehen, welche beispielsweise durch zumindest ein mechanisch festes Element oder eine Plane gebildet ist. An einer dieser vorderen Bordwand gegenüberliegenden Seite des Laderaums ist eine öffenbare und wieder verschließbare Heck-Bordwand angeordnet, welche beispielsweise als Rolltor, als aufwickelbare Plane, als zumindest eine Hecktür oder zumindest eine Heckklappe ausgebildet ist.

Ebenfalls nicht näher dargestellte Seitenwände des Curtainsiders, welche sich zwischen den Längsträgern 2, 3 und dem Ladeboden erstrecken, sind jeweils durch Planen gebildet, welche sich in der Art eines Vorhangs in den Längsträgern 2, 3 oder an diesen angeordneten Schienenelementen verschieben und/oder aufrollen lassen, so dass der Laderaum seitlich zugänglich ist.

Die dem Ladeboden gegenüberliegende Dachplanenanordnung 1 umfasst eine auf eine Oberseite der Querträger 4.1 bis 4.n aufgelegte und an diesen befestigte biegeelastische Dachplane 5. Vorliegend ist die Dachplanenanordnung 1 in einer geschlossenen Stellung gezeigt, in welcher die Dachplane 5 gespannt ist.

Zur Überführung der Dachplanenanordnung 1 aus der geschlossenen Stellung in eine geöffnete Stellung ist die Dachplane 5 in Längsausdehnung der Dachplane 5 aufrollbar und/oder faltbar, beispielsweise in Zick-Zack-Form. Durch eine solche Öffnung der Dachplane 5 ist ein Zugang des Laderaums über die Dachöffnung möglich, was eine Beladung des Laderaums mittels eines Gabelstaplers und/oder eines Krans ermöglicht bzw. vereinfacht. Um die Öffnung der Dachplane 5 zu ermöglichen, sind die zwischen den Längsträgern 2, 3 angeordneten und quer zur Längsausdehnung der Dachplane 5 verlaufenden Querträger 4.1 bis 4.n relativ zu den Längsträgern 2, 3 in Richtung der Längsausdehnung der Dachplane 5 verschiebbar ausgebildet. Beispielsweise sind zu diesem Zweck Enden der Querträger 4.1 bis 4.n jeweils in einer an den Längsträgern 2, 3 ausgebildeten Schienenführung gelagert. Insbesondere im geschlossenen Zustand der Dachplane 5 ist zumindest einer der Querträger 4.1 bis 4.n in seiner Position an den Längsträgern 2, 3 fixierbar, so dass die Dachplane 5 sicher in ihrer Geschlossenstellung gehalten ist.

Zu einer mechanischen Stabilisierung der Dachplanenanordnung 1, das heißt insbesondere der Rungen, Längsträger 2, 3, Querträger 4.1 bis 4.n und der Dachplane 5, gegen Verformung während eines Fahrbetriebs des Nutzfahrzeugs sind an einer den Querträgern 4.1 bis 4.n zugewandten Flachseite der Dachplane 5 mehrere schräg zu der Längsausdehnung der Dachplane 5 verlaufende und sich miteinander zumindest teilweise kreuzende zugfeste und biegeelastische Versteifungselemente 6 bis 13 befestigt. Dabei ist ein Ende eines jeweiligen Versteifungselements 6 bis 13 im Bereich eines an einem der Längsträger 2, 3 befindlichen Endes eines Querträgers 4.1 bis 4.n in geeigneter Weise kraftübertragend befestigt und ein verbleibendes Ende des jeweiligen Versteifungselements 6 bis 13 im Bereich eines an dem gegenüberliegenden Längsträger 2, 3 befindlichen Endes eines weiteren Querträgers 4.1 bis 4.n in geeigneter Weise kraftübertragend befestigt. Die an den Enden der Querträger 4.1 bis 4.n ausgebildeten Befestigungspunkte für die Versteifungselemente 6 bis 13 werden auch als Zurrpunkte bezeichnet.

In sich kreuzenden Abschnitten der Versteifungselemente 6 bis 13 sind diese in einer möglichen Ausgestaltung kraftübertragend miteinander und/oder mit dem in einem Kreuzungsbereich befindlichen jeweiligen Querträger 4.1 bis 4.n mechanisch verbunden.

Die Versteifungselemente 6 bis 13 sind dabei derart ausgebildet und derart an der Dachplane 5 und den Querträgern 4.1 bis 4.n befestigt, dass diese sich beim Öffnen der Dachplane 5 gemeinsam mit dieser falten und/oder aufrollen. Weiterhin ist die Ausbildung der Versteifungselemente 6 bis 13 und deren Befestigung derart ausgebildet, dass das Falten und/oder Aufrollen der Dachplane 5 nicht oder nur unwesentlich beeinträchtigt wird und ein Durch- und/oder Herabhängen der Versteifungselemente 6 bis 13 in den Laderaum, das heißt vom Dach in Richtung Ladeboden, vermieden wird.

Im vollständig entfalteten und/oder ausgerollten Zustand der Dachplane 5, das heißt bei geschlossenem Dach, sind die Versteifungselemente 6 bis 13 gespannt.

**Figur 2** zeigt eine Draufsicht einer Unterseite eines weiteren Ausführungsbeispiels einer Dachplanenanordnung 1 für einen Nutzfahrzeugaufbau.

Im Unterschied zu dem in Figur 1 dargestellten Ausführungsbeispiel der Dachplanenanordnung 1 sind zusätzlich weitere zugfeste und biegeelastische Versteifungselemente 14 bis 17 vorhanden, welche an der den Querträgern 4.1 bis 4.n zugewandten Flachseite der Dachplane 5 befestigt sind.

Hierbei erstrecken sich zwei Versteifungselemente 14, 15 in Längsausdehnung der Dachplane 5 und sind zumindest an Zurrpunkten der Querträger 4.1 bis 4.n befestigt, an welchen auch die Versteifungselemente 6 bis 13 befestigt sind.

Zwei weitere Versteifungselemente 16, 17 erstrecken sich jeweils an einem Ende der Dachplane 5 quer zwischen den Versteifungselementen 14, 15, wobei das Versteifungselement 16 an Zurrpunkten eines ersten Querträgers 4.1 und mit jeweils einem ersten Ende der Versteifungselemente 14, 15 kraftübertragend verbunden ist und das Versteifungselement 17 an Zurrpunkten eines letzten Querträgers 4.n und mit jeweils einem zweiten Ende der Versteifungselemente 14, 15 kraftübertragend verbunden ist.

Die Versteifungselemente 14 bis 17 bilden dabei einen Versteifungsrahmen, welcher beispielsweise bei Kurvenfahrt ein Ausbauchen des Nutzfahrzeugaufbaus, insbesondere der Rungen und Längsträger 2, 3 sowie daran befestigter Seitenplanen, zur kurvenäußeren Seite verhindert oder zumindest reduziert.

Hierzu sind im vollständig entfalteten und/oder ausgerollten Zustand der Dachplane 5, das heißt bei geschlossenem Dach, die Versteifungselemente 14 bis 17 gespannt.

Die Versteifungselemente 14 bis 17 sind dabei insbesondere analog zu den Versteifungselementen 6 bis 13 ausgebildet und in der gleichen Weise an den Querträgern 4.1 bis 4.n und der Dachplane 5 befestigt.

In möglichen weiteren Ausführungsbeispielen können, abweichend von den Darstellungen in den Figuren 1 und 2, auch andere Konfigurationen, das heißt Anordnungen und Verläufe, der Längsträger 2, 3, der Querträger 4.1 bis 4.n, der Dachplane 5 und/oder der Versteifungselemente 6 bis 17 vorhanden sein.

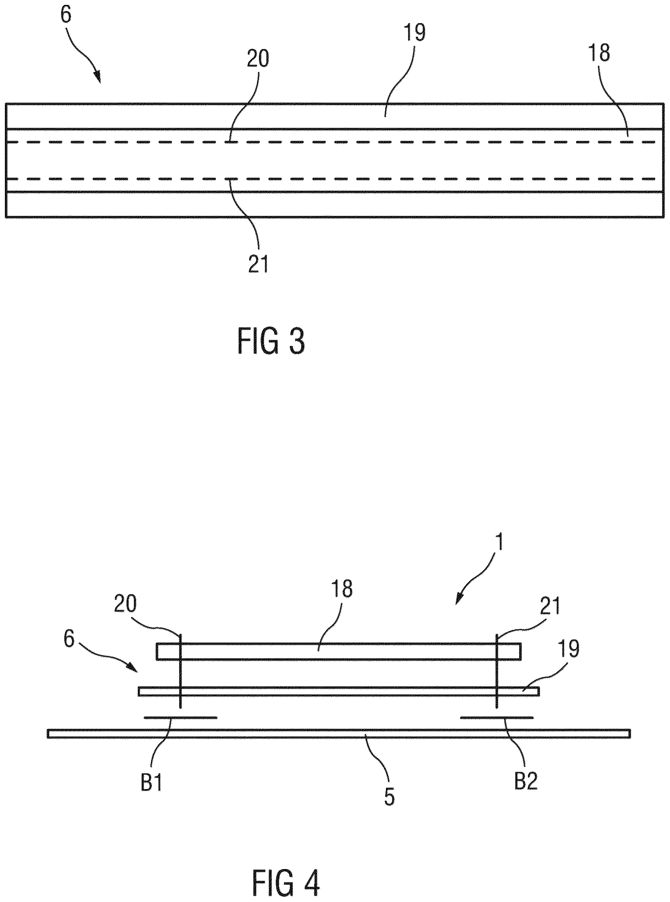

In **Figur 3** ist eine Draufsicht eines möglichen Ausführungsbeispiels des Versteifungselements 6 dargestellt. Die weiteren Versteifungselemente 7 bis 17 sind insbesondere analog zu dem Versteifungselement 6 ausgebildet.

Das Versteifungselement 6 weist ein aus einem textilen Gewebe gebildetes Gurtband 18 auf. Weiterhin weist das Versteifungselement 6 an einer Gurtband-Flachseite des Gurtbandes 18 zumindest ein flaches Verbindungselement 19 auf, welches mit einer ersten Element-Flachseite stoff- und/oder formschlüssig an dem Gurtband 18 befestigt ist.

Im dargestellten Ausführungsbeispiel ist das Gurtband 18 an seinen Längsseiten durchgängig mit dem Verbindungselement 19 unter Ausbildung von zwei Nähten 20, 21 vernäht. Dies ermöglicht, dass eine mechanische Flexibilität des Gurtbandes 18 nicht oder nur unwesentlich durch das Verbindungselement 19 beeinträchtigt wird. Alternativ oder zusätzlich kann das Gurtband 18 aber auch in anderer geeigneter Weise mit dem Verbindungselement 19 verbunden, beispielsweise verklebt und/oder vernietet, sein. Insbesondere ist die Verbindung zwischen dem Gurtband 18 und dem Verbindungselement 19 derart ausgebildet, dass ein Material des Verbindungselements 19 ein Material des Gurtbandes 18 nicht vollständig oder nicht durchdringt, so dass die mechanische Flexibilität des Gurtbandes 18 nicht oder nur unwesentlich durch das Verbindungselement 19 beeinträchtigt wird.

Dabei ist das Verbindungselement 19 bandförmig ausgebildet und erstreckt sich über eine gesamte Länge des Gurtbandes 18. Alternativ sind in nicht näher dargestellter Weise an der Gurtband-Flachseite des Gurtbandes 18 mehrere flache Verbindungselemente 19 mit ihren ersten Element-Flachseiten stoff- und/oder formschlüssig befestigt, wobei in Längsrichtung des Gurtbandes 18 zwischen den mehreren Verbindungselementen 19 jeweils ein Abstand ausgebildet sein kann.

Das Gurtband 18 ist insbesondere aus einem Material gebildet, welches Polyester und/oder Polypropylen und/oder Polyamid umfasst. Insbesondere ist das Gurtband 18 analog zu einem so genannten Spann- oder Zurrgurt oder Ladungssicherungsgurt ausgebildet.

Das zumindest eine Verbindungselement 19 ist aus einem mit der Dachplane 5 verklebbaren und/oder verschweißbaren Material gebildet und, wie in Figur 4 näher dargestellt, einer der ersten Element-Flachseite gegenüberliegenden zweiten Element-Flachseite der Dachplanen-Flachseite zugewandt und mit dieser verklebt und/oder verschweißt. In einer möglichen Ausgestaltung sind das zumindest eine Verbindungselement 19 und die Dachplane 5 aus dem gleichen Material gebildet.

**Figur 4** zeigt eine Explosionsdarstellung eines Querschnitts eines Ausschnitts einer Dachplanenanordnung 1 gemäß Figur 1 oder Figur 2.

Das Verbindungselement 19 ist dabei mit dem Gurtband 18 vernäht und in den Bereichen B1, B2 mit der Dachplane 5 verklebt und/oder verschweißt. Alternativ oder zusätzlich kann das Verbindungselement 19 auch in anderen Bereichen oder vollflächig mit der Dachplane 5 verklebt und/oder verschweißt sein.

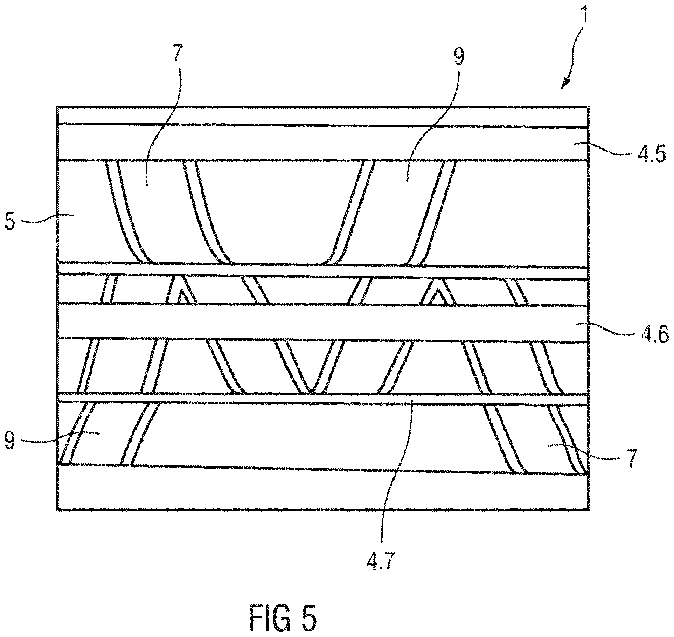

In **Figur 5** ist eine perspektivische Ansicht eines Ausschnitts einer Dachplanenanordnung 1 gemäß Figur 1 oder Figur 2 für einen Nutzfahrzeugaufbau dargestellt.

Die an der Unterseite der Dachplane 5 befestigten Versteifungselemente 7 und 9 sind gemäß den Figuren 1 bis 4 ausgebildet und angeordnet, so dass sich diese - wie dargestellt - gemeinsam mit der Dachplane 5 bei einem Öffnen des Daches in Falten legen und aufgrund ihrer hohen mechanischen Flexibilität das Falten der Dachplane 5 nicht oder zumindest nahezu nicht beeinträchtigt wird.

### BEZUGSZEICHENLISTE

- 1: Dachplanenanordnung
- 2: Längsträger
- 3: Längsträger
- 4.1 bis 4.n: Querträger
- 5: Dachplane
- An 18: Gurtband
- 19: Verbindungselement
- 20: Naht
- 21: Naht

- B1: Bereich
- B2: Bereich

## Patentansprüche

1. Dachplanenanordnung (1) für einen Nutzfahrzeugaufbau
- mit einer biegeelastischen sowie falt- und/oder rollbaren Dachplane (5) und
- mit zumindest einem an zumindest einer Dachplanen-Flachseite der Dachplane (5) befestigten zugfesten und biegeelastischen Versteifungselement (6 bis 17), wobei
- das zumindest eine Versteifungselement (6 bis 17) ein aus einem textilen Gewebe gebildetes Gurtband (18) aufweist,
- an einer Gurtband-Flachseite des Gurtbandes (18) zumindest ein flaches Verbindungselement (19) mit einer ersten Element-Flachseite stoff- und/oder formschlüssig befestigt ist,
- das zumindest eine Verbindungselement (19) aus einem mit der Dachplane (5) verklebbaren und/oder verschweißbaren Material gebildet ist und
- das zumindest eine Verbindungselement (19) einer der ersten Element-Flachseite gegenüberliegenden zweiten Element-Flachseite der Dachplanen-Flachseite zugewandt und mit dieser verklebt und/oder verschweißt ist.

2. Dachplanenanordnung (1) nach Anspruch 1, wobei an der Gurtband-Flachseite des Gurtbandes (18) mehrere flache Verbindungselemente (19) mit ihren ersten Element-Flachseiten stoff- und/oder formschlüssig befestigt sind.

3. Dachplanenanordnung (1) nach Anspruch 2, wobei in Längsrichtung des Gurtbandes (18) zwischen den Verbindungselementen (19) ein Abstand ausgebildet ist.

4. Dachplanenanordnung (1) nach Anspruch 1, wobei das zumindest eine Verbindungselement (19) bandförmig ausgebildet ist und sich über eine gesamte Länge des Gurtbandes (18) erstreckt.

5. Dachplanenanordnung (1) nach einem der vorhergehenden Ansprüche, wobei das zumindest eine Verbindungselement (19) und die Dachplane (5) aus dem gleichen Material gebildet sind.

6. Dachplanenanordnung (1) nach einem der vorhergehenden Ansprüche, wobei das Gurtband (18) aus einem Material gebildet ist, welches Polyester und/oder Polypropylen und/oder Polyamid umfasst.

7. Dachplanenanordnung (1) nach einem der vorhergehenden Ansprüche, wobei das zumindest eine Verbindungselement (19) und das Gurtband (18) miteinander vernäht und/oder verklebt und/oder vernietet sind.

8. Dachplanenanordnung (1) nach einem der vorhergehenden Ansprüche, wobei das zumindest eine Versteifungselement (6 bis 13) schräg zu einer Längsausdehnung der Dachplane (5) verlaufend angeordnet ist.

9. Dachplanenanordnung (1) nach einem der Ansprüche 1 bis 7, wobei das zumindest eine Versteifungselement (14, 15) in Richtung einer Längsausdehnung der Dachplane (5) verlaufend angeordnet ist.

10. Dachplanenanordnung (1) nach einem der Ansprüche 1 bis 7, wobei das zumindest eine Versteifungselement (16, 17) in Richtung einer Querausdehnung der Dachplane (5) verlaufend angeordnet ist.

11. Dachplanenanordnung (1) nach einem der Ansprüche 9 oder 10, wobei das zumindest eine Versteifungselement (14 bis 17) randseitig an der Dachplane (5) angeordnet ist.

12. Dachplanenanordnung (1) nach einem der vorhergehenden Ansprüche, wobei
- an der Dachplane (5) mehrere Versteifungselemente (6 bis 17) befestigt sind und
- die Versteifungselemente (6 bis 17) schräg zu einer Längsausdehnung der Dachplane (5) und/oder in Richtung der Längsausdehnung und/oder quer zur Längsausdehnung verlaufend angeordnet sind.

13. Dachplanenanordnung (1) nach Anspruch 12, wobei zumindest ein Teil der Versteifungselemente (6 bis 17) untereinander kraftübertragend verbunden ist.

14. Dachplanenanordnung (1) nach einem der vorhergehenden Ansprüche, aufweisend
- zwei in einem Dachbereich randseitig in Fahrtrichtung angeordnete Längsträger (2, 3) und
- zwischen den Längsträgern (2, 3) quer zu einer Längsausdehnung der Dachplane (5) verlaufende und relativ zu den Längsträgern (2, 3) in Richtung der Längsausdehnung der Dachplane (5) verschiebbare Querträger (4.1 bis 4.n),
wobei
- die Dachplane (5) auf die Querträger (4.1 bis 4.n) aufgelegt und mit diesen verbunden ist,
- zumindest an zwei Querträgern (4.1 bis 4.n) jeweils zumindest ein Zurrpunkt angeordnet ist und
- an zwei Zurrpunkten unterschiedlicher Querträger (4.1 bis 4.n) zumindest ein Versteifungselement (6 bis 17) befestigt ist.

15. Dachplanenanordnung (1) nach einem der vorhergehenden Ansprüche, wobei das zumindest eine Versteifungselement (6 bis 17) in einem vollständig entfalteten und/oder ausgerollten Zustand der Dachplane (5) gespannt ist.

16. Nutzfahrzeug, aufweisend einen Nutzfahrzeugaufbau mit einer Dachplanenanordnung (1) nach einem der vorhergehenden Ansprüche.
